# EUROPEAN PATENT APPLICATION

(11) **EP 4 779 768 A1**
(43) Date of publication of application: **22.07.2026**
(21) Application number: 26151825.2
(22) Date of filing: 14.01.2026
(51) Int. Cl.: H01M 50/15, H01M 50/176, H01M 50/533, H01M 50/538, H01M 50/55, H01M 50/553, H01M 50/557

(54) **SECONDARY BATTERY AND MANUFACTURING METHOD THEREOF**

(30) Priority: 15.01.2025 KR 20250006201; 01.04.2025 KR 20250042225
(71) Applicant: SK On Co., Ltd., Seoul 03161 (KR)
(72) Inventor: KWAK, Seung Ho, 34124 Daejeon (KR); KIM, Ji Woong, 34124 Daejeon (KR); JU, Seung Hoon, 34124 Daejeon (KR)
(74) Representative: Prüfer & Partner mbB Patentanwälte · Rechtsanwälte

(57) **Abstract**

The present disclosure relates to a secondary battery and a manufacturing method thereof, wherein the secondary battery includes: an electrode; a case having a receiving space, and accommodating the electrode in the receiving space; a current collector including a first protruding member including a first projection and a second protruding member including a second projection; and a cap coupled to the case to allow the first projection and the second projection penetrate through, and covering the receiving space.

## Description

### BACKGROUND OF THE INVENTION

### 1. Field

The present disclosure relates to a secondary battery and a manufacturing method thereof.

### 2. Description of the Related Art

Of secondary batteries, those that are chargeable and dischargeable are employed in small, portable electronic devices, such as cell phones and camcorders, or a plurality of batteries are connected to be used as a power source for driving motors in hybrid vehicles.

These secondary batteries are manufactured in a variety of shapes, among which prismatic secondary batteries are typically configured to accommodate an electrode assembly, which includes a positive electrode and a negative electrode that are alternately stacked, and an electrolyte in a case, receive a current collector electrically connected to a positive electrode tab and a negative electrode tab, which are electrode tabs formed in the electrode assembly, in the case, and install a cap for sealing the case in the case. In this case, the current collector and the cap are also electrically connected, such that the electrode assembly is electrically connected to the cap via a current collector.

In a conventional prismatic secondary battery, a positive electrode plate and a negative electrode plate, which are electrode plates of the current collector, are stacked on an upper portion of an electrode tab of the electrode assembly, and a laser is irradiated onto the electrode plates to couple the electrode plate and the electrode tab.

As such, to couple the electrode plate and the electrode tab located therebelow by irradiating the electrode plate with a laser, heat should be effectively conducted from one side of the electrode plate irradiated by the laser to the opposite side, to make the electrode plate have a relatively small thickness.

However, in the case that the electrode plate is formed to have a relatively small thickness, a portion of the electrode plate irradiated by the laser may be melted and perforated, and in the case that a hole is formed in the electrode plate, the laser may be directly irradiated to the electrode tab and the electrode assembly located below the electrode plate, causing damage to the electrode assembly.

Therefore, to address these issues, it is necessary to develop a secondary battery which allows easy coupling of an electrode plate with an electrode tab while having a relatively large thickness and, and a manufacturing method thereof.

### SUMMARY OF THE INVENTION

According to an aspect of the present disclosure, an object of the present disclosure is to provide a secondary battery capable of preventing damage to an electrode assembly when coupling an electrode plate and an electrode tab, and a manufacturing method thereof.

According to another aspect of the present disclosure, an object of the present disclosure is to provide a secondary battery in which an electrode plate and an electrode tab may be coupled with relative ease, and a manufacturing method thereof.

The present disclosure may be widely applied in the field of electric vehicles, battery charging stations, and other green technologies such as solar power and wind power utilizing batteries. Furthermore, the present disclosure may be used in eco-friendly electric vehicles, hybrid vehicles, and the like to prevent climate change by curbing air pollution and greenhouse gas emissions.

The present disclosure relates to a secondary battery which includes: an electrode including one or more electrode assemblies; a case open at one side, having a receiving space inside, and accommodating the electrode in the receiving space; a current collector including a first protruding member electrically connected with a first tab of the electrode and including a first projection and a second protruding member electrically connected with a second tab of the electrode and including a second projection; and a cap coupled to one side of the case to allow the first projection and the second projection penetrate through, and covering the receiving space, wherein the first tab is bent to be coupled to a surface of the first protruding member facing the cap, and the second tab is bent to be coupled to a surface of the second protruding member facing the cap.

In the secondary battery according to an embodiment, the one or more electrode assemblies may include a first electrode assembly and a second electrode assembly, wherein the first tab may include: a first-first tab electrically connected with the first electrode assembly; and a first-second tab electrically connected with the second electrode assembly, wherein the second tab may include a second-first tab electrically connected with the first electrode assembly and a second-second tab electrically connected with the second electrode assembly.

In the secondary battery according to an embodiment, the first-first tab may include: a first-first contact portion extending from the first tab along a first direction toward the second tab; a first-first vertical portion extending from the first-first contact portion along a second direction in which the electrode faces the cap; and a first-first horizontal portion extending from the first-first vertical portion along a third direction perpendicular to the first direction and the second direction, wherein the first-second tab may include: a first-second contact portion extending along the first direction; a first-second vertical portion extending from the first-second contact portion along the second direction; and a first-second horizontal portion extending from the first-second vertical portion along the third direction.

In the secondary battery according to an embodiment, the first-first contact portion and the first-first horizontal portion may form a step around the first-first vertical portion, wherein the first-first horizontal portion may be positioned on the first protruding member, the first-second contact portion and the first-second horizontal portion may form a step around the first-second vertical portion, and the first-second horizontal portion may be positioned on the first protruding member.

In the secondary battery according to an embodiment, a length of the first protruding member along the third direction may be equal to the shortest length among lengths between one end of the first-first horizontal portion connected to the first-first vertical portion and one end of the first-second horizontal portion connected to the first-second vertical portion.

In the secondary battery according to an embodiment, a length of the first protruding member along the second direction may be greater than a length of each of the first-first horizontal portion and the first-second horizontal portion along the second direction.

In the secondary battery according to an embodiment, the second-first tab may include: a second-first contact portion extending from the first tab along a first direction toward the second tab; a second-first vertical portion extending from the second-first contact portion along a second direction in which the electrode faces the cap; and a second-first horizontal portion extending from the second-first vertical portion along a third direction perpendicular to the first direction and the second direction, wherein the second-second tab may include: a second-second contact portion extending along the first direction; a second-second vertical portion extending from the second-second contact portion along the second direction; and a second-second horizontal portion extending from the second-second vertical portion along the third direction.

In the secondary battery according to an embodiment, the second-first contact portion and the second-first horizontal portion may form a step around the second-first vertical portion, and the second-first horizontal portion may be positioned on the second protruding member, wherein the second-second contact portion and the second-second horizontal portion may form a step around the second-second vertical portion, and the second-second horizontal portion may be positioned on the second protruding member.

In the secondary battery according to an embodiment, a length of the second protruding member along the third direction may be equal to the shortest length among lengths between one end of the second-first horizontal portion connected to the second-first vertical portion and one end of the second-second horizontal portion connected to the second-second vertical portion.

In the secondary battery according to an embodiment, a length of the second protruding member along the second direction may be greater than a length of each of the second-first horizontal portion and the second-second horizontal portion along the second direction.

In the secondary battery according to an embodiment, each of the first-first horizontal portion and the first-second horizontal portion may be provided with a cut-out groove, and the first projection may be positioned between the cut-out grooves formed in each of the first-first horizontal portion and the first-second horizontal portion.

In the secondary battery according to an embodiment, each of the second-first horizontal portion and the second-second horizontal portion may be provided with a cut-out groove, and the second projection may be positioned between the cut-out grooves formed in each of the second-first horizontal portion and the second-second horizontal portion.

The present disclosure may include a method of manufacturing a secondary battery, the method including: a forming operation of forming an electrode including one or more electrode assemblies; a first coupling operation of positioning a current collector, which includes a first protruding member including a first projection and a second protruding member including a second projection, in a first tab and a second tab included in the electrode and bending the first tab and the second tab; a second coupling operation of coupling a cap, through which the first projection and the second projection penetrate, to the electrode; and an accommodating operation of accommodating the electrode and the current collector in a case having one side open and provided with a receiving space therein so that the cap covers the open one side of the case.

In the method of manufacturing a secondary battery according to an embodiment, the one or more electrode assemblies may include a first electrode assembly and a second electrode assembly, wherein the forming operation may include: a first forming operation of forming a first-first tab electrically connected to the first electrode assembly, and a second-first tab, and forming first-second tab electrically connected to the second electrode assembly, and a second-second tab; a second forming operation of forming cut-out grooves in each of the first-first tab, the second-first tab, the first-second tab, and the second-second tab; and a positioning operation of positioning the first electrode assembly and the second electrode assembly.

The method of manufacturing a secondary battery according to an embodiment may further include a coating operation of coating, after the first coupling operation, an insulator on surfaces of the electrode other than a surface to which the current collector is coupled.

According to an embodiment of the present disclosure, it is possible to prevent damage to an electrode assembly when coupling an electrode plate and an electrode tab.

According to another embodiment of the present disclosure, it is possible to provide a secondary battery in which the electrode plate and the electrode tab are joined with relative ease, and a manufacturing method thereof.

### BRIEF DESCRIPTION OF THE DRAWINGS

Fig. 1 is an exploded perspective view of a secondary battery according to an embodiment of the present disclosure.
Fig. 2 is a diagram illustrating an electrode assembly constituting an electrode.
Fig. 3 is a diagram illustrating an electrode assembly with cut-out grooves provided in a first tab and a second tab.
Fig. 4 is a diagram illustrating a state in which a first protruding member of a current collector is positioned between first tabs.
Fig. 5 is a diagram illustrating a state in which a first tab is bent and coupled to a first protruding member.
Fig. 6 is a plan view of a current collector and an electrode, in which a first protruding member is positioned between a first-first tab and a first-second tab, and a second protruding member is positioned between a second-first tab and a second-second tab.
Fig. 7 is a plan view of a current collector and an electrode, in which a first protruding member is positioned between a first-first tab and a first-second tab, and a second protruding member is positioned between a second-first tab and a second-second tab.
Fig. 8 is a side view illustrating a state in which a first tab is bent and coupled to a first protruding member.
Fig. 9 is a diagram illustrating a cap which is joined to an electrode with a current collector therebetween to cover a first protruding member and a first tab.
Fig. 10 is a flowchart illustrating a method of manufacturing a secondary battery according to an embodiment of the present disclosure.
Fig. 11 is a diagram for illustrating a forming operation.
Fig. 12 is a diagram for illustrating a first coupling operation.
Fig. 13 is a diagram for illustrating a coating operation.
Fig. 14 is a diagram for illustrating a second coupling operation.
Fig. 15 is a diagram for illustrating an accommodating operation.

### DETAILED DESCRIPTION

Hereinafter, embodiments of the present application will be described in detail with reference to the accompanying drawings so that those skilled in the art to which the present disclosure pertains may easily carry out the present application. However, the present disclosure may be implemented in various different forms and is not limited to the embodiments described herein. In the drawings, parts irrelevant to the description are omitted for clearly describing the present application, and like reference numerals refer to like elements throughout the specification.

Throughout the specification of the present disclosure, when a part is described as being "connected" to another part, it includes not only a case that the part is "directly connected" but also a case where the part is "electrically connected" with another element interposed therebetween.

Throughout the specification of the present application, when a member is described as being "on" another member, it includes not only a case where the member is in contact with the other member but also a case where another member is present between the two members.

Throughout the specification of the present application, when a part is described to "include" a component, it means that the part may further include another component unless specifically stated otherwise, rather than excluding the other component. The terms such as "about" and "substantially" as used throughout the specification of the present application are used in a sense close to the numerical value when inherent manufacturing and material tolerances for the stated meaning are presented, and are used to prevent an unscrupulous infringer from unfairly taking advantage of the disclosed content in which precise or absolute numerical values are mentioned for ease of understanding of the present application. The degree terms "~ step" or "step of ~" used throughout the specification of the present application do not mean "a step for ~".

Hereafter, preferred embodiments of the present disclosure will be described in detail with reference to the accompanying drawings and the following description. However, the disclosure is not limited to the embodiments set forth herein and may be embodied in other forms. Throughout the specification, like reference numerals refer to like components.

Hereinafter, description will be set forth on a configuration of a secondary battery according to an embodiment of the present disclosure.

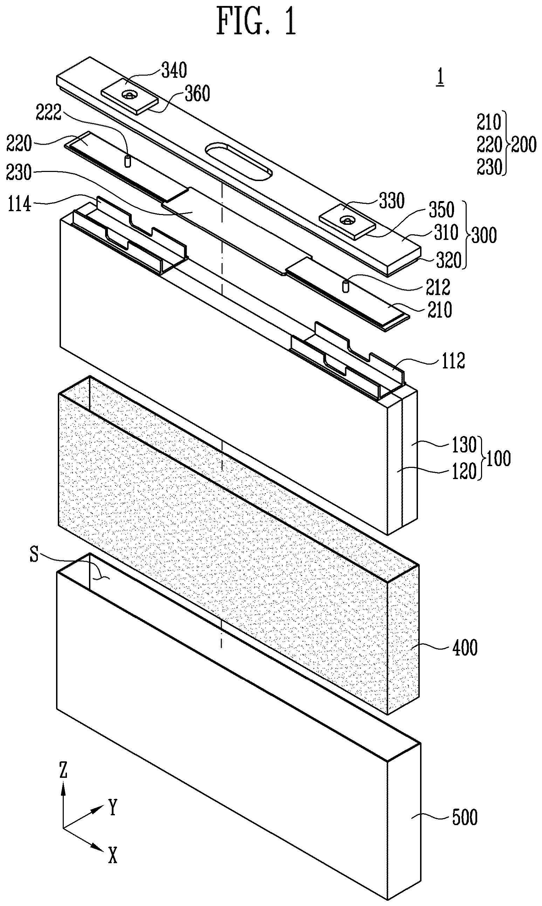

FIG. 1 is an exploded perspective view of a secondary battery according to an embodiment of the present disclosure.

Referring to FIG. 1, a secondary battery 1 includes an electrode 100, a current collector 200, a cap 300, an insulator 400, and a case 500. First, the electrode 100 will be described.

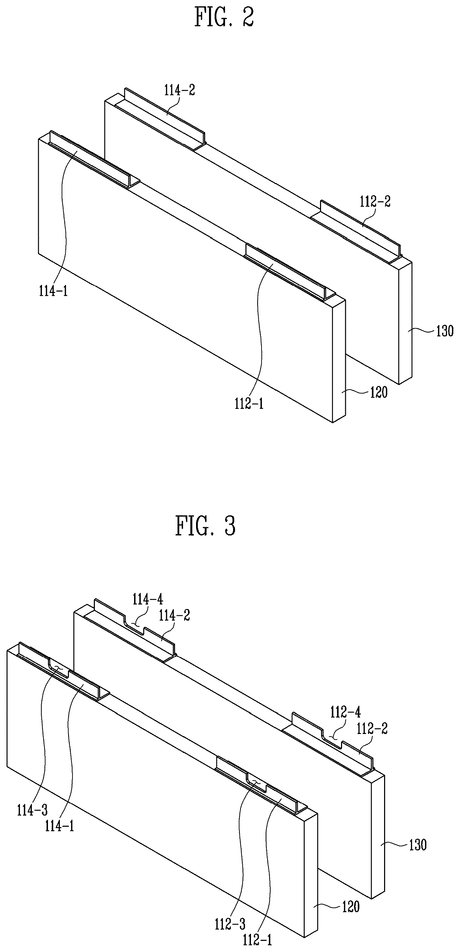

FIG. 2 is a diagram illustrating an electrode assembly constituting an electrode.

According to an embodiment, a secondary battery 1 includes an electrode 100 including one or more electrode assemblies 120, 130, a case 500 open at one side, having a receiving space inside, and accommodating the electrode 100 in the receiving space, a current collector 200 including a first protruding member 210 electrically connected with a first tab 112 of the electrode and including a first projection 212 and a second protruding member 220 electrically connected with a second tab 114 of the electrode and including a second projection 222 and a cap 300 coupled to one side of the case 500 to allow the first projection and the second projection penetrate through, and covering the receiving space, wherein the first tab 112 is bent to be coupled to a surface of the first protruding member 210 facing the cap 300, and the second tab 114 is bent to be coupled to a surface of the second protruding member 220 facing the cap 300.

According to an embodiment, the electrode 100 may include one or more electrode assemblies 120, 130, including a first pole including a first tab 112 of a first polarity, a second pole including a second tab 114 of a second polarity, and a separator. According to an embodiment, the first polarity may represent any one of a positive electrode and a negative electrode, and the second polarity may represent another one of the positive electrode and the negative electrode.

According to an embodiment, the one or more electrode assemblies 120, 130 may include a first electrode assembly 120 and a second electrode assembly 130. According to an embodiment, the number of one or more electrode assemblies 120, 130 included in the electrode 100 may not be limited thereto. For ease of description, hereinafter, the one or more electrode assemblies 120, 130 are described as including the first electrode assembly 120 and the second electrode assembly 130.

According to an embodiment, the first electrode assembly 120 may include a first pole including a first-first tab 112-1 of a first polarity, a second pole including a second-first tab 114-1 of a second polarity, and a separator. According to an embodiment, the second electrode assembly 130 may include a first pole including a first-second tab 112-2 of a first polarity, a second pole including a second-second tab 114-2 of a second polarity, and a separator.

According to an embodiment, the first electrode assembly 120 and the second electrode assembly 130 may be formed in a stacking type in which the first pole, the second pole, and the separator are stacked, or in a winding type that involves winding.

In other words, according to an embodiment, the first tab 112 may include a first-first tab 112-1 and a first-second tab 112-2. According to an embodiment, the second tab 114 may include a second-first tab 114-1 and a second-second tab 114-2. According to an embodiment, the first pole may represent a pole that is equal to the first polarity among the positive electrode and the negative electrode, and the second pole may represent a pole that is equal to the second polarity among the positive electrode and the negative electrode.

The positive electrode may be formed by applying a positive electrode active material, such as a transition metal oxide, to a positive electrode current collector formed of a metal foil such as aluminum.

In this case, the positive electrode includes a portion, on which the positive electrode active material is applied, and a positive electrode uncoated portion excluding the portion applied with the positive electrode active material. The positive electrode uncoated portion may be a passage for current flow between the positive electrode and the outside, and may also form a positive electrode tab.

The negative electrode may be formed by applying a negative electrode active material, such as graphite or carbon, to a negative electrode current collector formed of a metal foil such as copper or nickel.

In this case, the negative electrode includes a portion, on which a negative electrode active material is applied, and a negative electrode uncoated portion excluding the portion applied with the negative electrode active material. The negative electrode uncoated portion may be a passage for current flow between the negative electrode and the outside, and may form a negative electrode tab.

The separator is positioned between the positive electrode and negative electrode to prevent shorting and to enable the migration of lithium ions. These separators may be made of polyethylene, polypropylene, or a composite film of polyethylene and polypropylene.

The positive electrode tab may be electrically connected to a plurality of positive electrodes and may be formed as a separate member that is coupled to the positive electrode uncoated portion, or may be formed as a positive electrode uncoated portion.

The negative electrode tab may be electrically connected to a plurality of negative electrodes and may be formed as a separate member that is coupled to the negative electrode uncoated portion, or may be formed as a negative electrode uncoated portion.

FIG. 3 is a diagram illustrating an electrode assembly having a cut-out groove provided in a first tab and a second tab.

Referring to FIG. 3, according to an embodiment, a cut-out groove 112-3 may be provided in the first-first tab 112-1, and a cut-out groove 114-3 may be provided in the second-first tab 114-1.

According to an embodiment, a cut-out groove 112-4 may be provided in the first-second tab 112-2, and a cut-out groove 114-4 may be provided in the second-second tab 114-2.

The cut-out grooves 112-3, 112-4, 114-3, 114-4 may be formed as rectangular holes. Alternatively, the cut-out grooves 112-3, 112-4, 114-3, 114-4 may be formed in a U-shape. However, the shape of the cut-out grooves 112-3, 112-4, 114-3, 114-4 may not be limited thereto.

According to an embodiment, the cut-out grooves 112-3, 112-4 facing each other may be formed in the same shape. According to an embodiment, the cut-out grooves 114-3, 114-4 facing each other may be formed in the same shape. Next, the current collector 200 will be described.

Referring to FIG. 1, the current collector 200 may include a first protruding member 210, a second protruding member 220, and an insulating plate 230.

Specifically, the current collector 200 may include the first protruding member 210 electrically connected to the first tab 112 and including a first projection 212, the second protruding member 220 electrically connected to the second tab 114 and including a second projection 222, and the insulating plate 230 on which the first protruding member 210 and the second protruding member 220 are positioned, and may be accommodated in a receiving space S of a case 500 to be described later.

The first protruding member 210 may be electrically connected to the first tab 112 and include the first projection 212, and may be configured as a plate-shaped member formed of a conductive material. In other words, the first protruding member 210 may be electrically connected to the first-first tab 112-1 and the first-second tab 112-2.

For example, the first protruding member 210 may be configured as a plate-shaped member formed of the same material as the first tab 112, but the material of the first protruding member 210 may not be limited thereto.

As shown in FIG. 1, the first projection 212 may protrude from one surface of the first protruding member 210 in a direction toward a cap 300, and may be configured as a projection-shaped member formed of a conductive material.

Such a first projection 212 may be configured to be coupled to the first protruding member 210 by welding or the like, or may be configured to be integrated with the first protruding member 210.

The first protruding member 210 and the first tab 112 may be electrically coupled in a state of being in contact with each other, and the first tab 112 may be coupled to the first protruding member 210 by welding.

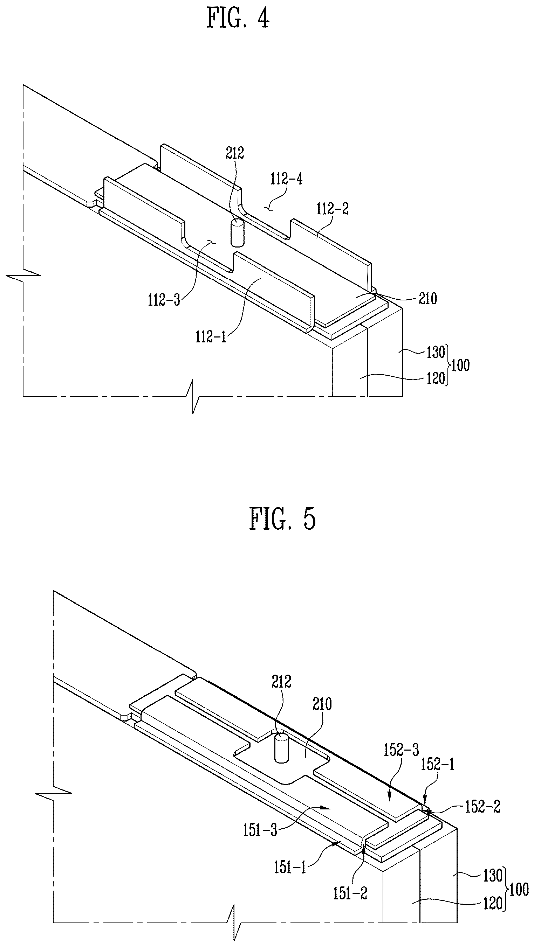

FIG. 4 is a diagram showing a state in which the first protruding member of the current collector is positioned between the first tabs.

Referring to FIG. 4, according to an embodiment, the first tabs 112 may be positioned adjacent to each other on one surface of the electrode 100 that faces the cap 300 so as to have at least a portion of the first protruding member 210 therebetween. According to an embodiment, the first-first tab 112-1 and the first-second tab 112-2 may be positioned adjacent to each other on one surface of the electrode 100 that faces the cap 300 so as to have at least a portion of the first protruding member 210 therebetween.

The current collector 200 may be located at a location facing one surface of the electrode 100 such that at least a portion of the first protruding member 210 is located between the first tabs 112. In other words, the current collector 200 may be located at a location facing one surface of the electrode 100 such that at least a portion of the first protruding member 210 is located between the first-first tab 112-1 and the first-second tab 112-2.

FIG. 5 is a diagram illustrating a state in which the first tab is bent to be coupled to the first protruding member. For convenience of description, a state in which the second tab 114 is bent to be coupled to the second protruding member 220 is omitted, but the state in which the second tab 114 is bent to be coupled to the second protruding member 220 may be the same as the state in which the first tab 112 is bent to be coupled to the first protruding member 210.

In the case that at least a portion of the first protruding member 210 is located between the first-first tab 112-1 and the first-second tab 112-2, the first-first tab 112-1 and the first-second tab 112-2 may be respectively bent and coupled to one surface of the first protruding member 210.

For example, the first-first tab 112-1 and the first-second tab 112-2 may be bent to come into contact with one surface of the first protruding member 210. Thereafter, the first-first tab 112-1, the first-second tab 112-2, and the first protruding member 210 may be coupled by irradiating a laser onto the first-first tab 112-1 and the first-second tab 112-2 and then welding the first-first tab 112-1 and the first-second tab 112-2 with the first protruding member 210.

Here, the first-first tab 112-1 and the first-second tab 112-2 may be configured to be prevented from coming into contact with the first projection 212.

Specifically, as described above, in the cast that the first-first tab 112-1 and the first-second tab 112-2 are bent and coupled to the first protruding member 210, cut-out grooves 112-3,112-4 may be formed in each of the first-first tab 112-1 and the first-second tab 112-2 to prevent contact with the first projection 212.

The cut-out grooves 112-3, 112-4 may be formed in a shape such that the first projection 212 may be positioned between spaces where the cut-out grooves 112-3, 112-4 are formed.

Alternatively, even when the cut-out grooves 112-3, 112-4 are not formed in the first-first tab 112-1 and the first-second tab 112-2, the first-first tab 112-1 and the first-second tab 112-2 may be formed in a shape that does not come in contact with the first projection 212 when bent to be in contact with one surface of the first protruding member 210. For example, the first-first tab 112-1 and the first-second tab 112-2 may be configured to have a length less than or equal to a predetermined length so as not to be in contact with the first projection 212.

According to an embodiment, the first-first tab 112-1 may include a first-first contact portion 151-1, a first-first vertical portion 151-2, and a first-first horizontal portion 151-3, which are formed by bending. According to an embodiment, the first-second tab 112-2 may include a first-second contact portion 152-1, a first-second vertical portion 152-2, and a first-second horizontal portion 152-3, which are formed by bending.

According to an embodiment, the first-first contact portion 151-1 and the first-second contact portion 152-1 may extend along a first direction. According to an embodiment, the first direction (X-axis in FIG. 1) may be a direction from the first tab 112 toward the second tab 114. According to an embodiment, the first-first contact portion 151-1 may be in contact with the first electrode assembly 120. According to an embodiment, the first-second contact portion 152-1 may be in contact with the second electrode assembly 130.

According to an embodiment, the first-first vertical portion 151-2 may extend along a second direction from the first-first contact portion 151-1. According to an embodiment, the second direction (Z-axis in FIG. 1) may be a direction in which the electrode 100 faces the cap 300 among directions perpendicular to the first direction. According to an embodiment, the first-second vertical portion 152-2 may extend along the second direction from the first-second contact portion 152-1.

According to an embodiment, the first-first horizontal portion 151-3 may extend along a third direction from the first-first vertical portion 151-2. According to an embodiment, the third direction (Y-axis in FIG. 1) may be a direction perpendicular to both the first direction and the second direction. According to an embodiment, the first-second horizontal portion 152-3 may extend along the third direction from the first-second vertical portion 152-2.

According to an embodiment, the first-first contact portion 151-1 and the first-first horizontal portion 151-3 may form a step around the first-first vertical portion 151-2. According to an embodiment, the first-first horizontal portion 151-3 may be positioned on the first protruding member 210. According to an embodiment, the first-first contact portion 151-1 and the first-first horizontal portion 151-3 may be formed to extend in opposite directions along the third direction around the first-first vertical portion 151-2.

According to an embodiment, the first-second contact portion 152-1 and the first-second horizontal portion 152-3 may form a step around the first-second vertical portion 152-2. According to an embodiment, the first-second horizontal portion 152-3 may be positioned on the first protruding member 210. According to an embodiment, the first-second contact portion 152-1 and the first-second horizontal portion 152-3 may be formed to extend in opposite directions along the third direction around the first-second vertical portion 152-2.

According to an embodiment, the first-first vertical portion 151-2 and the first-second vertical portion 152-2 may be in contact with side surfaces of the insulating plate 230 and the first protruding member 210. The second protruding member 220 may be electrically connected to the second tab 114, include a second projection 222, and be configured as a plate-shaped member formed of a conductive material. In other words, the second protruding member 220 may be electrically connected to the second-first tab 114-1 and the second-second tab 114-2.

For example, the second protruding member 220 may be configured as a plate-shaped member formed of the same material as the second tab 114, but the material of the second protruding member 220 may not be limited thereto.

As shown in FIG. 1, the second projection 222 may protrude from one surface of the second protruding member 220 in a direction toward the cap 300, and may be configured as a projection-shaped member formed of a conductive material.

Such a second projection 222 may be configured to be coupled to the second protruding member 220 by welding or the like, or may be configured to be integrated with the second protruding member 220.

The second protruding member 220 and the second tab 114 may be electrically coupled in a state of being in contact with each other, and the second tab 114 may be coupled to the second protruding member 220 by welding.

Specifically, the second tabs 114 may be positioned adjacent to each other on one surface of the electrode 100 facing the cap 300 so as to have at least a portion of the second protruding member 220 therebetween. According to an embodiment, the second-first tab 114-1 and the second-second tab 114-2 may be positioned adjacent to each other on one surface of the electrode 100 facing the cap 300 so as to have at least a portion of the second protruding member 220 therebetween.

The current collector 200 may be located at a position facing one surface of the electrode 100 such that at least a portion of the second protruding member 220 is located between the second tabs 114. In other words, the current collector 200 may be located at a position facing one surface of the electrode 100 such that at least a portion of the second protruding member 220 is located between the second-first tab 114-1 and the second-second tab 114-2.

Further, the second tab 114 may also be bent to be coupled to the second protruding member 220.

In the case that at least a portion of the second protruding member 220 is located between the second-first tab 114-1 and the second-second tab 114-2, the second-first tab 114-1 and the second-second tab 114-2 may be respectively bent and coupled to one surface of the second protruding member 220.

For example, the second-first tab 114-1 and the second-second tab 114-2 may be bent to come into contact with one surface of the second protruding member 220. Thereafter, the second-first tab 114-1 and the second-second tab 114-2 may be coupled with the second protruding member 220 by irradiating a laser onto the second-first tab 114-1 and the second-second tab 114-2 to weld the second-first tab 114-1 and the second-second tab 114-2 with the second protruding member 220.

At this time, the second-first tab 114-1 and the second-second tab 114-2 may be configured to be prevented from coming into contact with the second projection 222.

Specifically, as described above, in the case that the second-first tab 114-1 and the second-second tab 114-2 are bent and coupled to the second protruding member 220, cut-out grooves 114-3, 114-4 may be formed in each to prevent contact with the second projection 222.

The cut-out grooves 114-3, 114-4 may be formed in a shape such that the second projection 222 may be positioned between spaces where the cut-out grooves 114-3, 114-4 are formed.

Alternatively, even when the cut-out grooves 114-3, 114-4 are not formed in the second-first tab 114-1 and the second-second tab 114-2, the second-first tab 114-1 and the second-second tab 114-2 may be formed in a shape that is not in contact with the second projection 222 when bent to come in contact with one surface of the second protruding member 220. For example, the second-first tab 114-1 and the second-second tab 114-2 may be configured to have a length less than or equal to a predetermined length so as not to be in contact with the second projection 222.

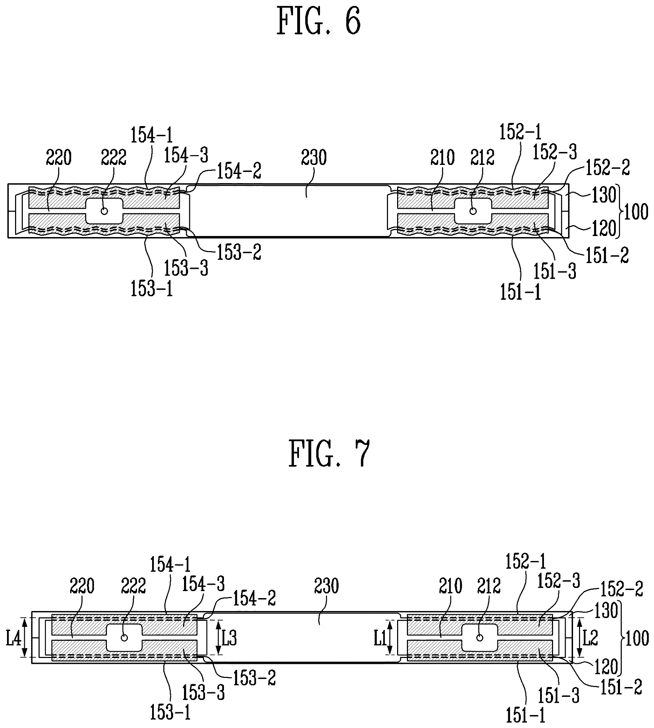

According to an embodiment, the second-first tab 114-1 may include a second-first contact portion 153-1 (FIG. 7), a second-first vertical portion 153-2 (FIG. 7), and a second-first horizontal portion 153-3 (FIG. 7), which are formed by bending. For convenience of description, the second-first contact portion 153-1, the second-first vertical portion 153-2, and the second-first horizontal portion 153-3 are not shown in FIG. 5, but each may be formed identically to the first-first contact portion 151-1, the first-first vertical portion 151-2, and the first-first horizontal portion 151-3.

According to an embodiment, the second-second tab 114-2 may include a second-second contact portion 154-1 (FIG. 7), a second-second vertical portion 154-2 (FIG. 7), and a second-second horizontal portion 154-3 (FIG. 7), which are formed by bending. For convenience of description, the second-second contact portion 154-1, the second-second vertical portion 154-2, and the second-second horizontal portion 154-3 are not shown in FIG. 5, but each may be formed identically to the first-second contact portion 152-1, the first-second vertical portion 152-2, and the first-second horizontal portion 152-3.

According to an embodiment, the second-first contact portion 153-1 and the second-second contact portion 154-1 may extend along the first direction. According to an embodiment, the second-first contact portion 153-1 may be in contact with the first electrode assembly 120. According to an embodiment, the second-second contact portion 154-1 may be in contact with the second electrode assembly 130.

According to an embodiment, the second-first vertical portion 153-2 may extend along the second direction from the second-first contact portion 153-1. According to an embodiment, the second-second vertical portion 154-2 may extend along the second direction from the second-second contact portion 154-1.

According to an embodiment, the second-first horizontal portion 153-3 may extend along the third direction from the second-first vertical portion 153-2. According to an embodiment, the second-second horizontal portion 154-3 may extend along the third direction from the second-second vertical portion 154-2.

According to an embodiment, the second-first contact portion 153-1 and the second-first horizontal portion 153-3 may form a step around the second-first vertical portion 153-2. According to an embodiment, the second-first horizontal portion 153-3 may be positioned on the second protruding member 220. According to an embodiment, the second-first contact portion 153-1 and the second-first horizontal portion 153-3 may be formed to extend in opposite directions along the third direction around the second-first vertical portion 153-2.

According to an embodiment, the second-second contact portion 154-1 and the second-second horizontal portion 154-3 may form a step around the second-second vertical portion 154-2. According to an embodiment, the second-second horizontal portion 154-3 may be positioned on the second protruding member 220. According to an embodiment, the second-second contact portion 154-1 and the second-second horizontal portion 154-3 may be formed to extend in opposite directions along the third direction around the second-second vertical portion 154-2.

According to an embodiment, the second-first vertical portion 153-2 and the second-second vertical portion 154-2 may be in contact with side surfaces of the insulating plate 230 and the second protruding member 220.

The shapes of the first protruding member 210 and the first tab 112, and the second protruding member 220 and the second tab 114, have an effect of preventing a decrease in the energy density of the secondary battery 1.

Each of the first-first horizontal portion 151-3 and the first-second horizontal portion 152-3 is provided with a cut-out groove 112-3, 112-4, and the first projection 212 is positioned between the cut-out grooves 112-3, 112-4 formed in each of the first-first horizontal portion 151-3 and the first-second horizontal portion 152-3.

Each of the second-first horizontal portion 153-3 and the second-second horizontal portion 154-3 is provided with a cut-out groove 114-3, 114-4, and the second projection 222 is positioned between the cut-out grooves 114-3, 114-4 formed in each of the second-first horizontal portion 153-3 and the second-second horizontal portion 154-3.

FIG. 6 is a plan view of the current collector and the electrode in which the first protruding member is positioned between the first-first tab and the first-second tab, and the second protruding member is positioned between the second-first tab and the second-second tab.

More specifically, FIG. 6 illustrates the current collector 200 and the electrode 100, viewed from the second direction (Z-axis direction), in which the first protruding member 210 is positioned between the first-first tab 112-1 and the first-second tab 112-2, and the second protruding member 220 is positioned between the second-first tab 114-1 and the second-second tab 114-2.

For example, as shown in FIG. 6, when the first tab 112 has a curved shape, a portion formed by bending the first tab 112 also has a curved shape.

At this time, the first protruding member 210 may be formed to have a curved shape.

As such, when the first protruding member 210 is positioned between the first-first tab 112-1 and the first-second tab 112-2, the first-first tab 112-1 and the first-second tab 112-2 may be prevented from being positioned between the first protruding member 210 and the electrode 100. Accordingly, the length of the current collector 200 coupled to the first-first tab 112-1 and the first-second tab 112-2 may be relatively reduced, thereby preventing an increase in the volume of the secondary battery 1 and thus preventing a decrease in the energy density of the secondary battery 1.

For example, when the second tab 114 has a curved shape, a portion formed by bending the second tab 114 also has a curved shape.

At this time, the second protruding member 220 may be formed to have a curved shape.

As such, in the case that the second protruding member 220 is positioned between the second-first tab 114-1 and the second-second tab 114-2, the length of the current collector 200 coupled to the second-first tab 114-1 and the second-second tab 114-2 may be relatively reduced, thereby preventing an increase in the volume of the secondary battery 1 and thus preventing a decrease in the energy density of the secondary battery 1.

The first protruding member 210 and the first tab 112, as well as the second protruding member 220 and the second tab 114, may be formed in a shape that allows more stable electrical conduction.

FIG. 7 is a plan view of the current collector and the electrode in which the first protruding member is positioned between the first-first tab and the first-second tab, and the second protruding member is positioned between the second-first tab and the second-second tab.

More specifically, FIG. 7 illustrates the current collector 200 and the electrode 100, viewed from the second direction (Z-axis direction), in which the first protruding member 210 is positioned between the first-first tab 112-1 and the first-second tab 112-2, and the second protruding member 220 is positioned between the second-first tab 114-1 and the second-second tab 114-2.

The first-first tab 112-1 and the first-second tab 112-2 may be positioned to be parallel to each other.

According to an embodiment, a length L1 of the first protruding member 210 along the third direction (Y-axis direction) may be equal to the shortest length among lengths between one end of the first-first horizontal portion 151-3 connected to the first-first vertical portion 151-2 and one end of the first-second horizontal portion 152-3 connected to the first-second vertical portion 152-2.

As such, in the case that the first tab 112 and the first protruding member 210 are formed, all bent portions of the first tab 112 may be coupled to the first protruding member 210, so that the coupling force between the first tab 112 and the first protruding member 210 is increased, thereby effectively preventing the first tab 112 from being spaced apart from the first protruding member 210.

Accordingly, it is possible to effectively prevent electrical disconnection between the first tab 112 and the first protruding member 210 as the first tab 112 is spaced apart from the first protruding member 210.

According to an embodiment, a length L2 along the third direction (Y-axis direction) in a region of the insulating plate 230 where the first protruding member 210 is positioned may be greater than the length L1 of the first protruding member 210 along the third direction (Y-axis direction).

Similarly, the second-first tab 114-1 and the second-second tab 114-2 may be positioned to be parallel to each other.

According to an embodiment, a length L3 of the second protruding member 220 along the third direction (Y-axis direction) may be equal to the shortest length among lengths between one end of the second-first horizontal portion 153-3 connected to the second-first vertical portion 153-2 and one end of the second-second horizontal portion 154-3 connected to the second-second vertical portion 154-2.

As such, in the case that the second tab 114 and the second protruding member 220 are formed, all bent portions of the second tab 114 may be coupled to the second protruding member 220, so that the coupling force between the second tab 114 and the second protruding member 220 is increased, thereby effectively preventing the second tab 114 from being spaced apart from the second protruding member 220.

Accordingly, it is possible to effectively prevent electrical disconnection between the second tab 114 and the second protruding member 220 as the second tab 114 is spaced apart from the second protruding member 220.

According to an embodiment, a length L4 along the third direction (Y-axis direction) in a region of the insulating plate 230 where the second protruding member 220 is positioned may be greater than the length L3 of the second protruding member 220 along the third direction (Y-axis direction).

The first protruding member 210 and the first tab 112, as well as the second protruding member 220 and the second tab 114, may be formed in a shape that prevents damage to the electrode assemblies 120, 130 when coupling the first protruding member 210 and the first tab 112 or coupling the second protruding member 220 and the second tab 114.

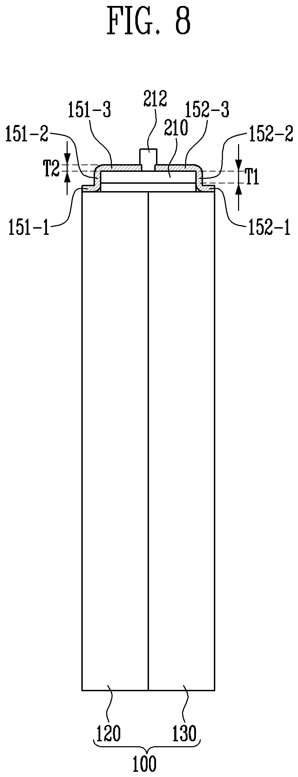

FIG. 8 is a side view showing a state in which the first tab is bent to be coupled to the first protruding member.

Referring to FIG. 8, a length T1 of the first protruding member 210 along the second direction (Z-axis direction) may be greater than a length T2 of each of the first-first horizontal portion 151-3 and the first-second horizontal portion 152-3 along the second direction.

In other words, the first protruding member 210 may be formed to be thicker than the first tab 112.

As such, in the case that the first protruding member 210 is formed to be relatively thick, upon irradiation of a laser onto the first tab 112 to couple the first protruding member 210 and the first tab 112, it is possible to effectively prevent the first protruding member 210 from being perforated to cause damage to the electrode assemblies 120, 130 located below the first protruding member 210.

A length of the second protruding member 220 along the second direction (Z-axis direction) may be greater than a length of each of the second-first horizontal portion 153-3 and the second-second horizontal portion 154-3 along the second direction.

In other words, the second protruding member 220 may be formed to be thicker than the second tab 114.

As such, in the case that the second protruding member 220 is formed to be relatively thick, upon irradiation of a laser onto the second tab 114 to couple the second protruding member 220 and the second tab 114, it is possible to effectively prevent the second protruding member 220 from being perforated to cause damage to the electrode assemblies 120, 130 located below the second protruding member 220.

The insulating plate 230 may be configured as a plate-shaped member formed of an insulating material so that the first protruding member 210 and the second protruding member 220 may be installed on one surface facing the cap 300.

Such an insulating plate 230 may be positioned to face one surface of the electrode 100 such that the first protruding member 210 is located between the first-first tab 112-1 and the first-second tab 112-2 and the second protruding member 220 is located between the second-first tab 114-1 and the second-second tab 114-2.

Next, the cap 300 will be described.

The cap 300 may be coupled to one side of the case 500 such that the first projection 212 and the second projection 222 penetrate therethrough to seal a receiving space S of the case 500.

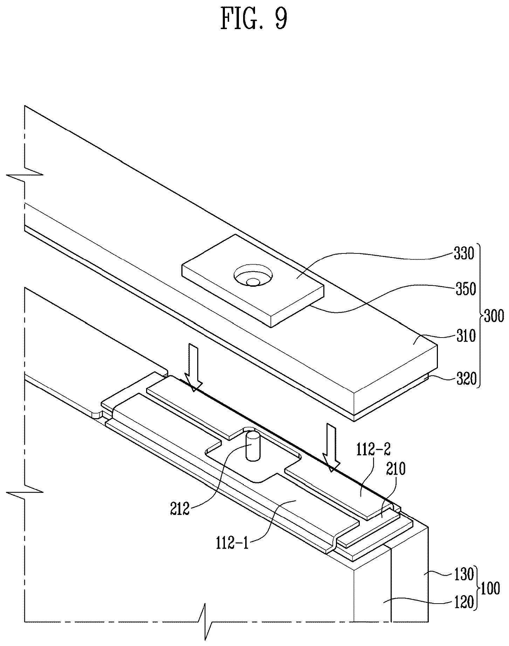

FIG. 9 is a diagram showing a cap coupled to the electrode with the current collector therebetween to cover the first protruding member and the first tab.

Specifically, as shown in FIG. 9, the cap 300 may be coupled to the electrode 100 with the current collector 200 therebetween such that the first projection 212 penetrates therethrough.

Here, although not shown in the drawing, the cap 300 may also be coupled to the electrode 100 with the current collector 200 therebetween such that the second projection 222 penetrates therethrough.

As such, the cap 300 may be exposed as the first projection 212 and the second projection 222 penetrate through, and may be coupled to one side of the case 500 to be described later.

Referring to FIG. 1, such a cap 300 may include a cap plate 310, an insulating member 320, a first terminal 330, a second terminal 340, a first gasket 350, and a second gasket 360. According to an embodiment, the first terminal 330 may be any one of a positive electrode terminal and a negative electrode terminal, and the second terminal 340 may be the other one of the positive electrode terminal and the negative electrode terminal.

The cap plate 310 may be formed as a plate-shaped member capable of being coupled to the case 500, and may be formed of a conductive material.

The insulating member 320 may be positioned between the cap plate 310 and the first projection 212 and between the cap plate 310 and the first protruding member 210 to insulate the cap plate 310, the first projection 212, and the first protruding member 210.

Further, the insulating member 320 may be positioned between the cap plate 310 and the second projection 222 and between the cap plate 310 and the second protruding member 220 to insulate the cap plate 310, the second projection 222, and the second protruding member 220.

In other words, the insulating member 320 may perform a function of insulating between the cap plate 310 and the positive electrode and the negative electrode of the electrode assemblies 120, 130, and may be formed of an insulating material.

The first terminal 330 may be positioned between the first projection 212 and the insulating member 320 to be electrically connected to the first projection 212, and may be formed of a conductive material.

The cap 300 may separately include such a first terminal 330, or may use the first projection 212 as the first terminal 330 instead of separately having the first terminal 330.

The second terminal 340 may be positioned between the second projection 222 and the insulating member 320 to be electrically connected to the second projection 222, and may be formed of a conductive material.

The cap 300 may separately include such a second terminal 340, or may use the second projection 222 as the second terminal 340 instead of separately having the second terminal 340.

The first gasket 350 may be formed of an insulating material and positioned between the first terminal 330 and the cap plate 310 to perform a function of insulating the first terminal 330 and the cap plate 310.

The second gasket 360, like the first gasket 350, may be formed of an insulating material and positioned between the second terminal 340 and the cap plate 310 to perform a function of insulating the second terminal 340 and the cap plate 310.

Next, the insulator 400 will be described.

Referring to FIG. 1, the insulator 400 may be formed of an insulating material and positioned between the case 500 and the electrode 100.

Such an insulator 400 may perform a function of insulating the case 500 and the electrode 100.

Next, the case 500 will be described.

Referring to FIG. 1, the case 500 may have one side open and a receiving space S formed therein, and may accommodate the electrode 100 in the receiving space S.

Such a case 500 may be formed of the same material as the cap 300 and may be formed in a rectangular parallelepiped shape with one side open, but the material and configuration of the case 500 may not be limited thereto.

Hereinafter, a configuration of a method of manufacturing a secondary battery according to an embodiment of the present disclosure will be described.

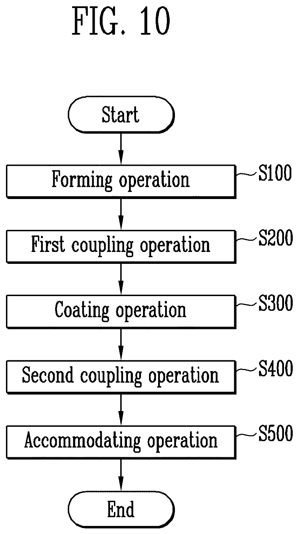

FIG. 10 is a flowchart showing a method of manufacturing a secondary battery according to an embodiment of the present disclosure.

Referring to FIG. 10, the method of manufacturing a secondary battery includes a forming operation S100, a first coupling operation S200, a coating operation S300, a second coupling operation S400, and an accommodating operation S500.

First, the forming operation S100 will be described.

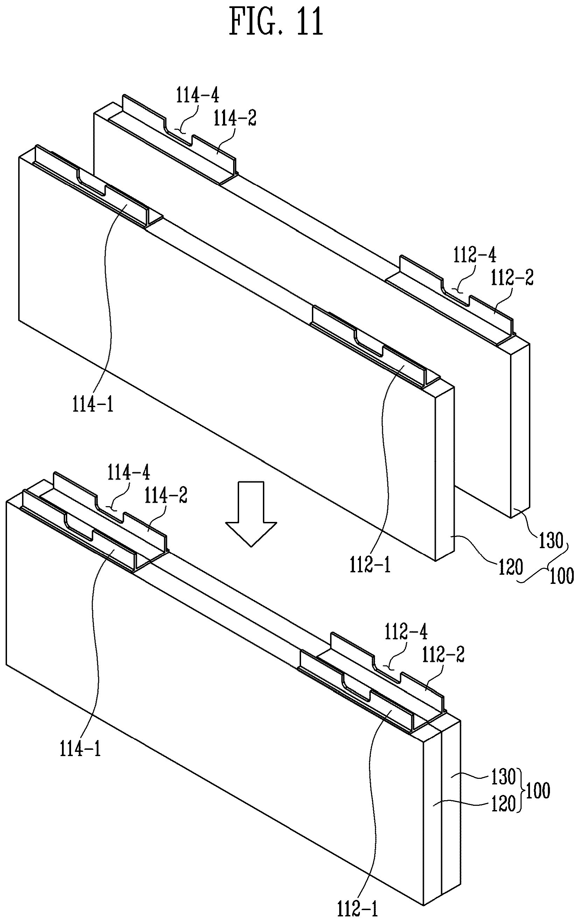

FIG. 11 is a diagram for describing the forming operation.

As shown in FIG. 11, the forming operation S100 may include forming an electrode 100 including one or more electrode assemblies 120, 130. In other words, the forming operation S100 may include forming a first electrode assembly 120, which includes a first pole having a first-first tab 112-1, a second pole having a second-first tab 114-1, and a separator, and a second electrode assembly 130, which includes a first pole having a first-second tab 112-2, a second pole having a second-second tab 114-2, and a separator.

According to an embodiment, the first electrode assembly 120 and the second electrode assembly 130 may be formed in a stacking type in which the first pole, the second pole, and the separator are stacked, or a winding type which involves winding.

The forming operation S100 may include a first forming operation, a second forming operation, and a positioning operation.

The first forming operation may include forming the first-first tab 112-1 and the second-first tab 114-1 of the first electrode assembly 120, and forming the first-second tab 112-2 and the second-second tab 114-2 of the second electrode assembly 130.

The second forming operation may include forming cut-out grooves 112-3, 112-4, 114-3, 114-4 in each of the first-first tab 112-1, the second-first tab 114-1, the first-second tab 112-2, and the second-second tab 114-2.

The cut-out grooves 112-3, 112-4, 114-3, 114-4 may be formed by cutting a part of each of the first-first tab 112-1, the second-first tab 114-1, the first-second tab 112-2, and the second-second tab 114-2 with a cutting tool.

The positioning operation may include positioning the first electrode assembly 120 and the second electrode assembly 130. The first electrode assembly 120 and the second electrode assembly 130 may be positioned such that the first electrode assembly 120 and the second electrode assembly 130 are adjacent to each other.

Next, the first coupling operation S200 will be described.

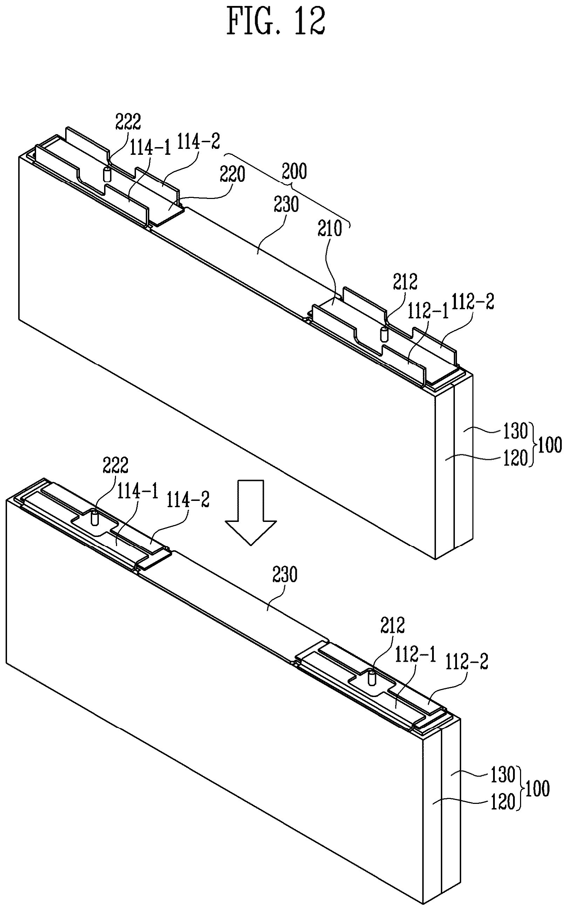

FIG. 12 is a diagram for describing the first coupling operation.

As shown in FIG. 12, the first coupling operation S200 may include coupling the current collector 200 to the electrode 100.

The first coupling operation S200 may include positioning the current collector 200 in the first tab 112 and the second tab 114, and bending the first tab 112 and the second tab 114.

Next, the coating operation S300 will be described.

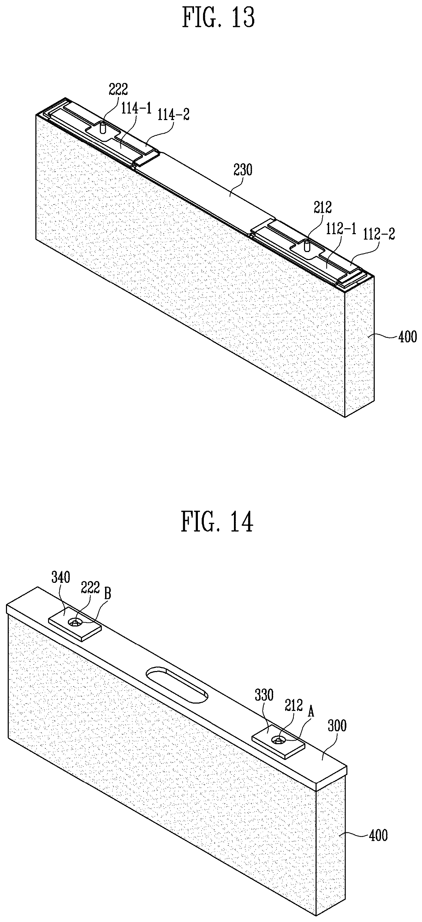

FIG. 13 is a diagram for describing the coating operation.

As shown in FIG. 13, the coating operation S300 may include coating the insulator 400 onto surfaces of the electrode 100 except for a surface to which the current collector 200 is coupled.

Next, the second coupling operation S400 will be described.

FIG. 14 is a diagram for describing the second coupling operation.

As shown in FIG. 14, the second coupling operation S400 may include coupling the cap 300, through which the first projection 212 and the second projection 222 penetrate, to the electrode 100.

At this time, the cap 300 may be coupled to the electrode 100 with the current collector 200 therebetween, and the cap 300 and the electrode 100 may be coupled by welding a portion A where the first projection 212 is located and a portion B where the second projection 222 is located.

Next, the accommodating operation S500 will be described.

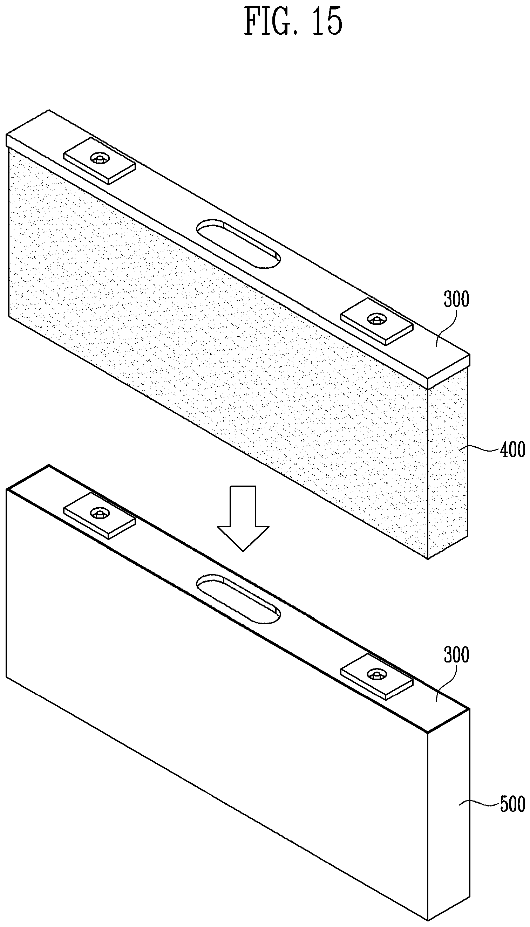

FIG. 15 is a diagram for describing the accommodating operation.

As shown in FIG. 15, the accommodating operation S500 may include accommodating the electrode 100 and the current collector 200 in a case 500 having one side open and a receiving space S formed therein, such that the cap 300 seals the open side of the case 500.

At this time, the cap 300 and the case 500 may be coupled by welding.

In the case that the first tab 112 is coupled to one surface of the first protruding member 210, unlike a case where the first tab 112 is coupled to the other surface of the first protruding member 210, heat transferred to one surface of the first protruding member 210 does not need to pass through the first protruding member 210 to be conducted to the first tab 112, so the first protruding member 210 may be formed to be relatively thick.

Similarly, in the case that the second tab 114 is coupled to one surface of the second protruding member 220, unlike a case where the second tab 114 is coupled to the other surface of the second protruding member 220, heat transferred to one surface of the second protruding member 220 does not need to pass through the second protruding member 220 to be conducted to the second tab 114, so the second protruding member 220 may be formed to be relatively thick.

The secondary battery and the manufacturing method thereof according to the present disclosure provide an effect of preventing damage to the electrode assembly due to perforation of the electrode plate when coupling the electrode plate and the electrode tab, because the electrode tab and the electrode plate are coupled by irradiating a laser onto the electrode tab positioned on one surface of the electrode plate facing the cap, allowing the electrode plate to be relatively thick.

Further, the electrode tab and the electrode plate are coupled by irradiating a laser onto the electrode tab, which has a relatively small thickness and is capable of easily conducting heat, thereby providing an effect of facilitating the coupling of the electrode tab and the electrode plate.

Some of the aspects of the present disclosure are as follows:
Aspect 1: A secondary battery comprising: an electrode including one or more electrode assemblies; a case open at one side, having a receiving space inside, and accommodating the electrode in the receiving space; a current collector including a first protruding member electrically connected with a first tab of the electrode and including a first projection and a second protruding member electrically connected with a second tab of the electrode and including a second projection; and a cap coupled to one side of the case to allow the first projection and the second projection penetrate through, and covering the receiving space, wherein the first tab is bent to be coupled to a surface of the first protruding member facing the cap, and the second tab is bent to be coupled to a surface of the second protruding member facing the cap.
Aspect 2: The secondary battery according to aspect 1, wherein the one or more electrode assemblies include a first electrode assembly and a second electrode assembly, wherein the first tab includes: a first-first tab electrically connected with the first electrode assembly; and a first-second tab electrically connected with the second electrode assembly, wherein the second tab includes: a second-first tab electrically connected with the first electrode assembly; and a second-second tab electrically connected with the second electrode assembly.
Aspect 3: The secondary battery according to any one of the preceding aspects, wherein the first-first tab includes: a first-first contact portion extending from the first tab along a first direction toward the second tab; a first-first vertical portion extending from the first-first contact portion along a second direction in which the electrode faces the cap; and a first-first horizontal portion extending from the first-first vertical portion along a third direction perpendicular to the first direction and the second direction, wherein the first-second tab includes: a first-second contact portion extending along the first direction; a first-second vertical portion extending from the first-second contact portion along the second direction; and a first-second horizontal portion extending from the first-second vertical portion along the third direction.
Aspect 4: The secondary battery according to any one of the preceding aspects, wherein the first-first contact portion and the first-first horizontal portion form a step around the first-first vertical portion, and the first-first horizontal portion is positioned on the first protruding member, wherein the first-second contact portion and the first-second horizontal portion form a step around the first-second vertical portion, and the first-second horizontal portion is positioned on the first protruding member.
Aspect 5: The secondary battery according to any one of the preceding aspects, wherein a length of the first protruding member along the third direction is equal to the shortest length among lengths between one end of the first-first horizontal portion connected to the first-first vertical portion and one end of the first-second horizontal portion connected to the first-second vertical portion.
Aspect 6: The secondary battery according to any one of the preceding aspects, wherein a length of the first protruding member along the second direction is greater than a length of each of the first-first horizontal portion and the first-second horizontal portion along the second direction.
Aspect 7: The secondary battery according to any one of the preceding aspects, wherein the second-first tab includes: a second-first contact portion extending from the first tab along a first direction toward the second tab; a second-first vertical portion extending from the second-first contact portion along a second direction in which the electrode faces the cap; and a second-first horizontal portion extending from the second-first vertical portion along a third direction perpendicular to the first direction and the second direction, wherein the second-second tab includes: a second-second contact portion extending along the first direction; a second-second vertical portion extending from the second-second contact portion along the second direction; and a second-second horizontal portion extending from the second-second vertical portion along the third direction.
Aspect 8: The secondary battery according to any one of the preceding aspects, wherein the second-first contact portion and the second-first horizontal portion form a step around the second-first vertical portion, and the second-first horizontal portion is positioned on the second protruding member, wherein the second-second contact portion and the second-second horizontal portion form a step around the second-second vertical portion, and the second-second horizontal portion is positioned on the second protruding member.
Aspect 9: The secondary battery according to any one of the preceding aspects, wherein a length of the second protruding member along the third direction is equal to the shortest length among lengths between one end of the second-first horizontal portion connected to the second-first vertical portion and one end of the second-second horizontal portion connected to the second-second vertical portion.
Aspect 10: The secondary battery according to any one of the preceding aspects, wherein a length of the second protruding member along the second direction is greater than a length of each of the second-first horizontal portion and the second-second horizontal portion along the second direction.
Aspect 11: The secondary battery according to any one of the preceding aspects, wherein each of the first-first horizontal portion and the first-second horizontal portion is provided with a cut-out groove, and the first projection is positioned between the cut-out grooves formed in each of the first-first horizontal portion and the first-second horizontal portion.
Aspect 12: The secondary battery according to any one of the preceding aspects, wherein each of the second-first horizontal portion and the second-second horizontal portion is provided with a cut-out groove, and the second projection is positioned between the cut-out grooves formed in each of the second-first horizontal portion and the second-second horizontal portion.
Aspect 13: A method of manufacturing a secondary battery, comprising: a forming operation of forming an electrode including one or more electrode assemblies; a first coupling operation of positioning a current collector, which includes a first protruding member including a first projection and a second protruding member including a second projection, in a first tab and a second tab included in the electrode and bending the first tab and the second tab; a second coupling operation of coupling a cap, through which the first projection and the second projection penetrate, to the electrode; and an accommodating operation of accommodating the electrode and the current collector in a case having one side open and provided with a receiving space therein so that the cap covers the open one side of the case.
Aspect 14: The method according to aspect 13, wherein the one or more electrode assemblies include a first electrode assembly and a second electrode assembly, wherein the forming operation includes:
   a first forming operation of forming a first-first tab electrically connected to the first electrode assembly, and a second-first tab, and forming first-second tab electrically connected to the second electrode assembly, and a second-second tab; a second forming operation of forming cut-out grooves in each of the first-first tab, the second-first tab, the first-second tab, and the second-second tab; and a positioning operation of positioning the first electrode assembly and the second electrode assembly.
Aspect 15: The method according to any one of the preceding aspects, further comprising a coating operation of coating, after the first coupling operation, an insulator on surfaces of the electrode other than a surface to which the current collector is coupled.

The above description of the present disclosure is merely for illustrative purposes, and those skilled in the art to which the present disclosure pertains will understand that various modifications can be easily made without departing from the technical spirit or essential features of the present disclosure. Therefore, the embodiments described above are to be understood as illustrative and not restrictive in all respects. For example, each component described as being in a single form may be implemented in a dispersed form, and components described as being dispersed may likewise be implemented in a combined form.

The scope of the present disclosure is defined by the following claims rather than the foregoing detailed description, and all changes or modified forms derived from the meanings, the scope, and the equivalent concept of the claims are to be construed as being included in the scope of the present disclosure.

## Claims

1. A secondary battery comprising:
an electrode including one or more electrode assemblies;
a case open at one side, having a receiving space inside, and accommodating the electrode in the receiving space;
a current collector including a first protruding member electrically connected with a first tab of the electrode and including a first projection and a second protruding member electrically connected with a second tab of the electrode and including a second projection; and
a cap coupled to one side of the case to allow the first projection and the second projection penetrate through, and covering the receiving space,
wherein the first tab is bent to be coupled to a surface of the first protruding member facing the cap, and the second tab is bent to be coupled to a surface of the second protruding member facing the cap.

2. The secondary battery according to claim 1, wherein the one or more electrode assemblies include a first electrode assembly and a second electrode assembly,
wherein the first tab includes:
a first-first tab electrically connected with the first electrode assembly; and
a first-second tab electrically connected with the second electrode assembly,
wherein the second tab includes:
a second-first tab electrically connected with the first electrode assembly; and
a second-second tab electrically connected with the second electrode assembly.

3. The secondary battery according to any one of the preceding claims, wherein the first-first tab includes:
a first-first contact portion extending from the first tab along a first direction toward the second tab;
a first-first vertical portion extending from the first-first contact portion along a second direction in which the electrode faces the cap; and
a first-first horizontal portion extending from the first-first vertical portion along a third direction perpendicular to the first direction and the second direction,
wherein the first-second tab includes:
a first-second contact portion extending along the first direction;
a first-second vertical portion extending from the first-second contact portion along the second direction; and
a first-second horizontal portion extending from the first-second vertical portion along the third direction.

4. The secondary battery according to any one of the preceding claims, wherein the first-first contact portion and the first-first horizontal portion form a step around the first-first vertical portion, and the first-first horizontal portion is positioned on the first protruding member,
wherein the first-second contact portion and the first-second horizontal portion form a step around the first-second vertical portion, and the first-second horizontal portion is positioned on the first protruding member.

5. The secondary battery according to any one of the preceding claims, wherein a length of the first protruding member along the third direction is equal to the shortest length among lengths between one end of the first-first horizontal portion connected to the first-first vertical portion and one end of the first-second horizontal portion connected to the first-second vertical portion.

6. The secondary battery according to any one of the preceding claims, wherein a length of the first protruding member along the second direction is greater than a length of each of the first-first horizontal portion and the first-second horizontal portion along the second direction.

7. The secondary battery according to any one of the preceding claims, wherein the second-first tab includes:
a second-first contact portion extending from the first tab along a first direction toward the second tab;
a second-first vertical portion extending from the second-first contact portion along a second direction in which the electrode faces the cap; and
a second-first horizontal portion extending from the second-first vertical portion along a third direction perpendicular to the first direction and the second direction,
wherein the second-second tab includes:
a second-second contact portion extending along the first direction;
a second-second vertical portion extending from the second-second contact portion along the second direction; and
a second-second horizontal portion extending from the second-second vertical portion along the third direction.

8. The secondary battery according to any one of the preceding claims, wherein the second-first contact portion and the second-first horizontal portion form a step around the second-first vertical portion, and the second-first horizontal portion is positioned on the second protruding member,
wherein the second-second contact portion and the second-second horizontal portion form a step around the second-second vertical portion, and the second-second horizontal portion is positioned on the second protruding member.

9. The secondary battery according to any one of the preceding claims, wherein a length of the second protruding member along the third direction is equal to the shortest length among lengths between one end of the second-first horizontal portion connected to the second-first vertical portion and one end of the second-second horizontal portion connected to the second-second vertical portion.

10. The secondary battery according to any one of the preceding claims, wherein a length of the second protruding member along the second direction is greater than a length of each of the second-first horizontal portion and the second-second horizontal portion along the second direction.

11. The secondary battery according to any one of the preceding claims, wherein each of the first-first horizontal portion and the first-second horizontal portion is provided with a cut-out groove, and the first projection is positioned between the cut-out grooves formed in each of the first-first horizontal portion and the first-second horizontal portion.

12. The secondary battery according to any one of the preceding claims, wherein each of the second-first horizontal portion and the second-second horizontal portion is provided with a cut-out groove, and the second projection is positioned between the cut-out grooves formed in each of the second-first horizontal portion and the second-second horizontal portion.

13. A method of manufacturing a secondary battery, comprising:
a forming operation of forming an electrode including one or more electrode assemblies;
a first coupling operation of positioning a current collector, which includes a first protruding member including a first projection and a second protruding member including a second projection, in a first tab and a second tab included in the electrode and bending the first tab and the second tab;
a second coupling operation of coupling a cap, through which the first projection and the second projection penetrate, to the electrode; and
an accommodating operation of accommodating the electrode and the current collector in a case having one side open and provided with a receiving space therein so that the cap covers the open one side of the case.

14. The method according to claim 13, wherein the one or more electrode assemblies include a first electrode assembly and a second electrode assembly,
wherein the forming operation includes:
a first forming operation of forming a first-first tab electrically connected to the first electrode assembly, and a second-first tab, and forming first-second tab electrically connected to the second electrode assembly, and a second-second tab;
a second forming operation of forming cut-out grooves in each of the first-first tab, the second-first tab, the first-second tab, and the second-second tab; and
a positioning operation of positioning the first electrode assembly and the second electrode assembly.

15. The method according to any one of the preceding claims, further comprising a coating operation of coating, after the first coupling operation, an insulator on surfaces of the electrode other than a surface to which the current collector is coupled.
